# EUROPEAN PATENT SPECIFICATION

(11) **EP 3 381 258 B1**
(45) Date of publication and mention of the grant of the patent: **28.04.2021**
(21) Application number: 18171389.2
(22) Date of filing: 18.07.2014
(51) Int. Cl.: A01D 34/00, G05D 1/02

(54) **LAWN MOWER ROBOT**
RASENMÄHROBOTER
ROBOT DE TONDEUSE À GAZON

(30) Priority: 29.01.2014 KR 20140011044
(43) Date of publication of application: 03.10.2018
(62) Divisional of application: 14177619.5
(73) Proprietor: LG Electronics Inc., Seoul 150-721 (KR)
(72) Inventor: NAM, Dongkyun, 153-802 Seoul (KR); WOO, Jongjin, 153-802 Seoul (KR); KIM, Dongseong, 153-802 Seoul (KR)
(74) Representative: Vossius & Partner Patentanwälte Rechtsanwälte mbB

(56) References cited:
- EP-A1- 2 296 005
- CN-A- 102 890 505
- US-A1- 2014 012 418

## Description

The present invention relates to a lawn mower robot in which a position of a main body may be identified on the basis of a boundary.

A lawn mower is an apparatus for mowing a lawn planted in a home's yard, a playground, or the like. Such a lawn mower is classified into a home type and a tractor type used in a wide playground or farm.

The lawn mower for home is classified into a walk behind type for mowing the lawn while a person directly drags the lawn mower from behind and a directly hand carrying type.

However, there are burdens in that persons should directly operate all of two types of lawn mowers.

Particularly, since it is difficult to mow the lawn of the yard by directly operating the lawn mower by a user in today's busy daily life, it is usual to hire outside persons for mowing the lawn, to thereby generate hiring costs.

Accordingly, an automatic robot type lawn mower has been developed in order to prevent generation of additional costs and reduce a user's burden. Many studies have been carried out in order to control the automatic robot type lawn mower such that the automatic robot type lawn mower is present within a desired region.

CN 102 890 505 A relates to a boundary system, comprising a boundary line, a signal generation device, a signal detection unit and a control unit, wherein the signal generation device is used for generating a preset boundary signal and sending the preset boundary signal to the boundary line, and a magnetic filed can be generated when the preset boundary signal passes through the boundary line; the signal detection unit is arranged in an automatic walking device and is used for detecting the magnetic filed and generating a detection signal; the control unit is arranged in the automatic walking device and is used for receiving the detection signal and judging whether the automatic walking device is located in a working area or not.

Accordingly, the present invention is directed to a lawn mower that substantially obviates one or more problems due to limitations and disadvantages of the related art.

An object of the present invention is to provide a lawn mower robot.

This object is achieved with the features of the independent claim. The dependent claims relate to preferred aspects of the invention.

Another object of the present invention is to provide a lawn mower robot in which a position of a main body may be identified on the basis of a boundary,

Another object of the present invention is to provide a lawn mower robot capable of sensing whether a main body is present inside or outside an operation region by sensing signals generated by a boundary wire.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein,

a lawn mower robot includes a boundary mark portion which has a boundary wire generating a specific signal, and a main body which receives the signal generated by the boundary wire and is driven in a certain region, wherein the main body includes a receiving portion which receives the signal transmitted from the boundary wire, and a controller which analyzes a waveform of the signal received in the receiving portion to determine a maximum value and a minimum value for a predetermined time, identifies the number of upper inflection portions present within a constant maximum value range and the number of lower inflection portions present within a constant minimum value range, and compares the number of the upper inflection portions with the number of the lower inflection portions to determine a position of the main body relative to the boundary wire, and each of the upper inflection portions means a portion at which a waveform of the signal is changed from ascending to descending and each of the lower inflection portions means a portion at which a waveform of the signal is changed from descending to ascending

The lawn mower robot comprises: a cutting portion configured to cut a lawn, a drive portion configured to move and rotate the main body in a desired direction, wherein the drive portion includes a plurality of rotatable wheels each of which are individually rotated.

It is to be understood that both the foregoing general description and the following detailed description of the present invention are exemplary and explanatory and are intended to provide further explanation of the invention as claimed.

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a top view illustrating a main body of a lawn mower robot according to an embodiment of the present invention;
FIG. 2 is a block diagram of the lawn mower robot in FIG. 1;
FIG. 3 is a control flowchart according to an embodiment of the present invention;
FIG. 4 is a view for explaining arrangement of a waveform received in an inside region defined by a boundary wire, the main body, and the boundary wire; and
FIG. 5 is a view for explaining arrangement of a waveform received in an outside region defined by the boundary wire, the main body, and the boundary wire.
Reference will now be made in detail to the preferred embodiments of the present invention, examples of which are illustrated in the accompanying drawings.

In the description, the size or shape of each component illustrated in the drawings may be exaggerated for convenience of description and clarity. In addition, terms defined in consideration of configurations and functions of the present invention may vary with the intention or practice of a user or an operator. Therefore, such terms should be defined based on the entire content disclosed herein.

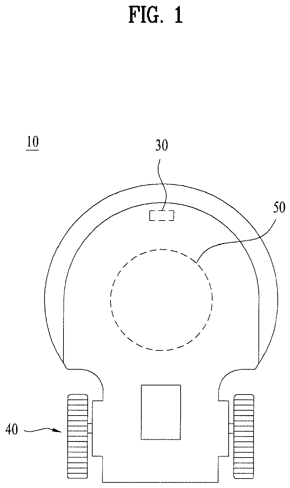

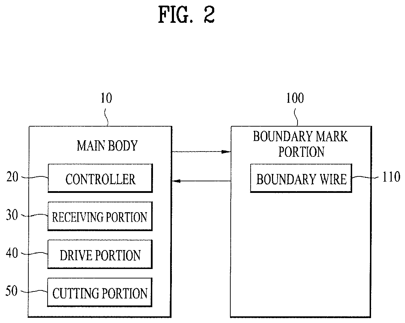

FIG. 1 is a top view illustrating a main body of a lawn mower robot according to an embodiment of the present invention. FIG. 2 is a block diagram of the lawn mower robot in FIG. 1. Hereinafter, a description will be given with reference to FIGs. 1 and 2.

The lawn mower robot may include a main body 10 movable to cut a lawn and a boundary mark portion 100 defining an operation region in which the main body 10 operates during movement thereof.

The boundary mark portion 100 includes a boundary wire 110 defining a boundary of the operation region and may include a station capable of supplying current to the boundary wire 110. That is, the boundary wire 110 may be connected to the station so as to generate electromagnetic waves by the current supplied from the station.

The main body 10 of the lawn mower robot includes a cutting portion 50 capable of cutting a lawn. The cutting portion 50 may have sharp blades configured to be rotatable.

The main body 10 includes a drive portion 40 which may move and rotate the main body 10 in a desired direction. The drive portion 40 includes a plurality of rotatable wheels each of which is be individually rotated, so that the main body 10 may be rotated in a desired direction.

The main body 10 includes a receiving portion 30 which receives signals generated by the boundary wire 110. The receiving portion 30 receives electromagnetic waves generated by the current flowing in the boundary wire 110, thereby being capable of acquiring information about whether the main body 10 reaches the boundary wire 110, whether the main body 10 is present within a closed curved surface formed by the boundary wire 110, whether the main body 10 is driven along the boundary wire 110, and the like.

The main body 10 may drive the drive portion 40 using the information received by the receiving portion 30. That is, a controller 20 may control driving of the main body 10 using the information received by the receiving portion 30. In addition, the controller 20 may also establish a map of the operation region defined by the boundary wire 110 by acquiring coordinate information according to a movement trajectory of the main body 10 while the main body 10 moves along the boundary wire 110.

In particular, the controller 20 may set a starting point from which the main body 10 moves before beginning to operate by means of the coordinate information of the operation region. The controller 20 may control the drive portion 40 such that the main body 10 moves to the starting point.

In addition, the controller 20 may allow the cutting portion 50 to be driven after the main body 10 moves to the operation starting point, so that the cutting portion 50 begins to mow the lawn.

Meanwhile, the controller 20 may analyze signals received by the receiving portion 30 and determine a position of the main body 10 relative to the boundary wire 110 in response to the analyzed signals.

That is, the controller 20 may analyze signals and determine whether the main body 10 is located inside the operation region (that is, in the closed curved surface formed by the boundary wire) defined by the boundary wire 110 or whether the main body 10 is located outside the operation region defined by the boundary wire 110.

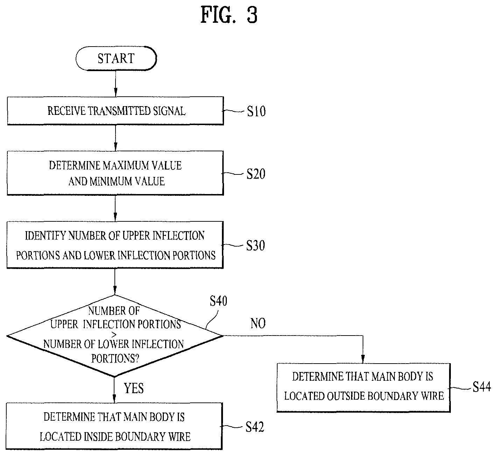

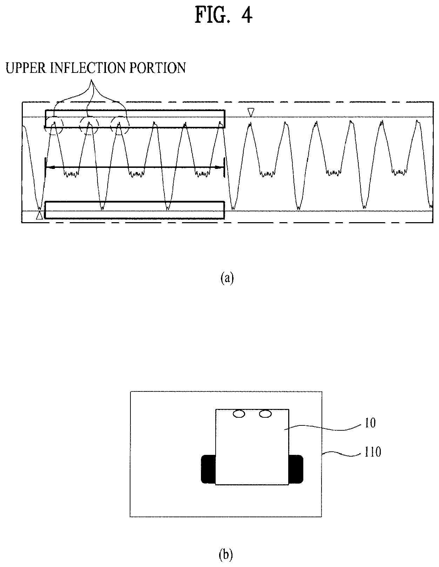

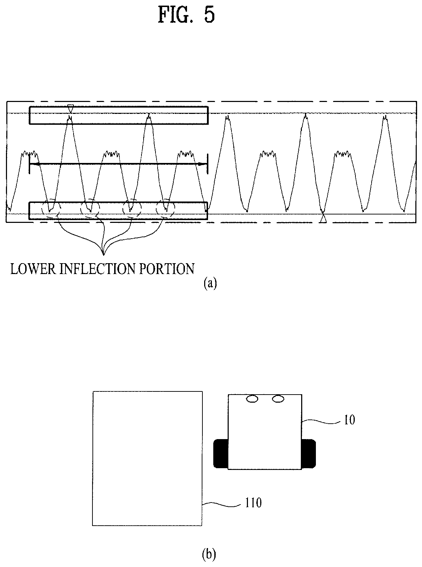

FIG. 3 is a control flowchart according to an embodiment of the present invention. FIG. 4 is a view for explaining arrangement of a waveform received in an inside region defined by the boundary wire, the main body, and the boundary wire. FIG. 5 is a view for explaining arrangement of a waveform received in an outside region defined by the boundary wire, the main body, and the boundary wire. Hereinafter, a description will be given with reference to FIGs. 3 to 5.

Alternating current having a constant cycle may be supplied to the boundary wire 110 in the boundary mark portion 100. Since alternating current has a constant waveform, the boundary wire 110 may generate a signal having a constant cycle, namely an electromagnetic wave.

Meanwhile, the boundary wire 110 may be made of a material through which alternating current may flow.

The receiving portion 30 may receive a signal generated by the boundary wire 110 (S10).

Since alternating current flows in the boundary wire 110, an electromagnetic field may be formed around the boundary wire 110. Accordingly, when the receiving portion 30 approaches the boundary wire 110, an induced voltage may be generated in the receiving portion 30 from the boundary wire 110.

It is possible to determine a maximum value and a minimum value of the signal received in the receiving portion 30 for a predetermined time (S20).

The receiving portion 30 receives a signal for a predetermined time and then may provide the signal to the controller 20. In this case, the predetermined time is preferably a time for which at least one cycle or more of the signal may be acquired.

Meanwhile, it may also be possible to acquire data having a cycle repeated by approximately 100 times. In this case, the predetermined time may mean approximately 1ms. Of course, the predetermined time may also be variously modified due to properties of the signal.

As shown in FIGs. 4(a) or 5(a), maximum and minimum values of the signal in the waveform thereof are determined by a value of the acquired induced voltage. In each drawing, the maximum value of the signal is a value indicated at the uppermost side of the vertical axis, and the minimum value of the signal is a value indicated at the lowermost side of the vertical axis.

In this case, since all voltages received in the receiving portion 30 have a value greater than 0, all of the maximum and minimum values are greater than 0.

In the present invention, the maximum and minimum values are determined according to the received signal instead of being selected as one value because the receiving portion 30 acquires a signal by the generated induced voltage and the size of the signal varies according to a distance between the boundary wire 110 and the main body 100. That is, if the maximum and minimum values are selected as one value and the selected value is uniformly applied in every situation, erroneous information may be acquired.

When the maximum and minimum values are determined, the number of upper inflection portions present within a constant maximum value range for a relevant time and the number of lower inflection portions present within a constant minimum value range for a relevant time are identified (S30). The constant maximum value range is set to cover values below and/or above the determined maximum value. The constant minimum value range is set to cover values below and/or above the determined minimum value.

Each of the upper inflection portions means a portion at which the waveform of the signal is changed from ascending to descending and each of the lower inflection portions means a portion at which the waveform of the signal is changed from descending to ascending.

In the present invention, the waveform of the received signal is analyzed, and an ascending or descending pattern of a gradient is analyzed when phase is set to the x-axis and amplitude is set to the y-axis.

That is, the upper inflection portion means a portion at which the signal has a gradient from ascending to descending and the lower inflection portion means a portion at which the signal has a gradient from descending to ascending.

In this case, in the waveform present within a range of 10% to 30% on the basis of the maximum and minimum values, the number of the upper and lower inflection portions may be identified. Of course, the range may be variously modified.

Accordingly, as shown in FIG. 4(a), six upper inflection portions may be present in a portion corresponding to the constant maximum value region (constant range), namely in a portion located at the upper side of the signal.

On the other hand, two lower inflection portions may be present in a portion corresponding to the constant minimum value region (constant range), namely in a portion located at the lower side of the signal.

The number of the upper inflection portions is compared with the number of the lower inflection portions (S40). In this case, a position of the main body 10 relative to the boundary wire 110 may be determined using the compared number.

When a signal as shown in FIG. 4(a) is received and thus the number of the upper inflection portions is greater than the number of the lower inflection portions, the main body may be determined to be located inside the operation region defined by the boundary wire (S42).

The position of the main body 10 relative to the boundary wire 110 in this state is shown in FIG. 4(b). That is, when the main body 10 is present in an inside space of the boundary wire 110, the signal may be received in the receiving portion 30 such that the number of the upper inflection portions is greater than the number of the lower inflection portions.

On the other hand, when a signal as shown in FIG. 5(a) is received and thus the number of the lower inflection portions is greater than the number of the upper inflection portions, the main body may be determined to be located outside the operation region defined by the boundary wire (S44).

The position of the main body 10 relative to the boundary wire 110 in this state is shown in FIG. 5(b). That is, when the main body 10 is present in an outside region of the boundary wire 110, the signal may be received in the receiving portion 30 such that the number of the upper inflection portions is less than the number of the lower inflection portions.

In accordance with the present invention, a position of a main body may be identified in relation to a boundary. In particular, it may be possible to sense whether the main body is present inside or outside an operation region by sensing signals generated by a boundary wire.

In addition, it may be possible to sense whether the main body is present in an inner region or an outer region divided by the boundary wire using the boundary wire, regardless of the distance between the boundary wire and the robot.

It will be apparent to those skilled in the art that various modifications and variations can be made in the present invention without departing from the scope of the invention, which is defined by the appended claims. Thus, it is intended that the present invention covers the modifications and variations of this invention provided they come within the scope of the appended claims.

## Claims

1. A lawn mower robot configured to be operated within an operation region defined by a boundary mark portion which has a boundary wire (110) generating a specific signal, comprising:
a main body (10) which is configured to receive the signal generated by the boundary wire (110) and is driven in a certain region of the operation region,
wherein the main body (10) comprises:
a receiving portion (30) which is configured to receive the signal transmitted from the boundary wire (110);
a controller (20) which is
configured to analyze a waveform of the signal received in the receiving portion (30) to determine a maximum value and a minimum value for a predetermined time and a respective constant maximum value range and a respective constant minimum value range,
configured to identify the number of upper inflection portions present within the constant maximum value range and the number of lower inflection portions present within the constant minimum value range,
configured to compare the number of the upper inflection portions with the number of the lower inflection portions to determine a position of the main body (10) relative to the boundary wire (110), and
wherein each of the upper inflection portions means a portion at which the waveform of the signal is changed from ascending to descending and each of the lower inflection portions means a portion at which the waveform of the signal is changed from descending to ascending;
a cutting portion (50) configured to cut a lawn; and
a drive portion (40) configured to move and rotate the main body (10) in a desired direction,
wherein the drive portion (40) includes a plurality of rotatable wheels each of which are individually rotated.

2. The lawn mower robot according to claim 1, wherein the receiving portion (30) receives electromagnetic waves generated by the current flowing in the boundary wire (110).

3. The lawn mower robot according claim 2, wherein the controller (20) is configured to acquire information about one of whether the main body (10) reaches the boundary wire (110), whether the main body (10) is present within a closed curved surface formed by the boundary wire (110), and whether the main body (10) is driven along the boundary wire (110), using the information received by the receiving portion (30).

4. The lawn mower robot according to claim 2, wherein the main body (10) is configured to drive the drive portion (40) using the information received by the receiving portion (30).

5. The lawn mower robot according to claim 4, wherein the controller (20) is configured to establish a map of the operation region defined by the boundary wire (110) by acquiring coordinate information according to a movement trajectory of the main body (10) while the main body (10) moves along the boundary wire (110).

6. The lawn mower robot according to claim 5, wherein the controller (20) is configured to set a starting point from which the main body (10) moves before beginning to operate by means of the coordinate information of the operation region.

7. The lawn mower robot according to claim 6, wherein the controller (20) is configured to control the drive portion (40) such that the main body (10) moves to the starting point.

8. The lawn mower robot according to claim 6, wherein the controller (20) is configured to allow the cutting portion (50) to be driven after the main body (10) moves to the operation starting point, so that the cutting portion (50) begins to mow the lawn.

9. The lawn mower robot according to any of claims 1 to 8, wherein the boundary mark portion is configured to generate a signal when alternating current having a constant cycle is supplied to the boundary wire (110).

10. The lawn mower robot according to any of claims 1 to 9, wherein the receiving portion (30) senses an induced voltage generated by the signal provided from the boundary wire (110).

11. The lawn mower robot according to claim 10, wherein the voltage sensed by the receiving portion (30) is a positive value greater than 0.

12. The lawn mower robot according to any of claims 1 to 11, wherein the maximum and minimum values vary according to a distance between the boundary wire (110) and the main body (10).

13. The lawn mower robot according to any claims 1 to 12, wherein the controller (20) is configured to determine that the main body (10) is located inside an operation region defined by the boundary wire (110) when the number of the upper inflection portions is greater than the number of the lower inflection portions.

14. The lawn mower robot according to any of claims 1 to 13, wherein the controller (20) is configured to determine that the main body (10) is located outside an operation region defined by the boundary wire (110) when the number of the upper inflection portions is less than the number of the lower inflection portions.

## Patentansprüche

1. Rasenmähroboter zum Betrieb innerhalb eines Betriebsbereichs, welcher durch einen Grenzmarkierungsabschnitt definiert ist, der einen Grenzdraht (110) aufweist, der ein bestimmtes Signal erzeugt, aufweisend:
einen Hauptkörper (10), der dazu ausgebildet ist, das vom Grenzdraht (110) erzeugte Signal zu empfangen, und in einem bestimmten Bereich des Betriebsbereichs gefahren wird,
wobei der Hauptkörper (10) aufweist:
einen Empfangsabschnitt (30) zum Empfangen des vom Grenzdraht (110) gesandten Signals und
eine Steuereinheit (20)
ausgebildet zum Analysieren einer Wellenform des im Empfangsabschnitt (30) empfangenen Signals, um einen Maximal- und einen Minimalwert während eines bestimmten Zeitraums und einen entsprechenden konstanten Maximalwertbereich und einen entsprechenden konstanten Minimalwertbereich zu bestimmen,
ausgebildet zur Ermittlung der Anzahl der sich im konstanten Maximalwertbereich befindenden oberen Wendebereiche und der Anzahl der sich im konstanten Minimalwertbereich befindenden unteren Wendebereiche und
ausgebildet zum Vergleichen der Anzahl der oberen Wendebereiche mit der Anzahl der unteren Wendebereiche, um eine Position des Hauptkörpers (10) relativ zum Grenzdraht (110) zu bestimmen, und
wobei die oberen Wendebereiche jeweils einen Bereich darstellen, in dem die Wellenform des Signals von aufsteigend zu absteigend wechselt, und die unteren Wendebereiche jeweils einen Bereich darstellen, in dem die Wellenform des Signals von absteigend zu aufsteigend wechselt,
einem Schneideabschnitt (50) zum Schneiden eines Rasens, und
einem Antriebsabschnitt (40) zum Bewegen und Drehen des Hauptkörpers (10) in eine gewünschte Richtung;
wobei der Antriebsabschnitt (40) mehrere drehbare Räder aufweist, die jeweils unabhängig voneinander gedreht werden.

2. Rasenmähroboter nach Anspruch 1, wobei der Empfangsabschnitt (30) elektromagnetische Wellen empfängt, die durch den im Grenzdraht (110) fließenden Strom erzeugt werden.

3. Rasenmähroboter nach Anspruch 2, wobei die Steuereinheit (20) dazu ausgebildet ist, entweder Informationen darüber zu erfassen, ob der Hauptkörper (10) den Grenzdraht (110) erreicht oder ob der Hauptkörper (10) sich in einer durch den Grenzdraht (110) gebildeten geschlossenen gekrümmten Fläche befindet oder ob der Hauptkörper (10) entlang des Grenzdrahts (110) gelenkt wird, wobei die vom Empfangsabschnitt (30) empfangenen Informationen verwendet werden.

4. Rasenmähroboter nach Anspruch 2, wobei der Hauptkörper (10) dazu ausgebildet ist, den Antriebsabschnitt (40) mit Hilfe der vom Empfangsabschnitt (30) empfangenen Informationen anzutreiben.

5. Rasenmähroboter nach Anspruch 4, wobei die Steuereinheit (20) dazu ausgebildet ist, eine Karte des durch den Grenzdraht (110) definierten Betriebsbereichs zu erstellen, indem Koordinateninformationen gemäß einer Bewegungsbahn des Hauptkörpers (10), während sich dieser entlang des Grenzdrahts (110) bewegt, beschafft werden.

6. Rasenmähroboter nach Anspruch 5, wobei die Steuereinheit (20) dazu ausgebildet ist, einen Startpunkt zu setzen, von dem aus sich der Hauptkörper (10) vor Betriebsbeginn mit Hilfe der Betriebsbereich-Koordinateninformationen bewegt.

7. Rasenmähroboter nach Anspruch 6, wobei die Steuereinheit (20) dazu ausgebildet ist, den Antriebsabschnitt (40) so zu steuern, dass sich der Hauptkörper (10) zum Startpunkt bewegt.

8. Rasenmähroboter nach Anspruch 6, wobei die Steuereinheit (20) dazu ausgebildet ist zu erlauben, dass der Schneideabschnitt (50) angetrieben wird, nachdem sich der Hauptkörper (10) zum Betriebsstartpunkt bewegt hat, so dass der Schneideabschnitt (50) mit dem Rasenmähen beginnt.

9. Rasenmähroboter nach einem der Ansprüche 1 bis 8, wobei der Grenzmarkierungsabschnitt dazu ausgebildet ist, ein Signal zu erzeugen, wenn dem Grenzdraht (110) Wechselstrom mit einer konstanten Periode zugeführt wird.

10. Rasenmähroboter nach einem der Ansprüche 1 bis 9, wobei der Empfangsabschnitt (30) eine durch das vom Grenzdraht (110) gelieferte Signal erzeugte induzierte Spannung abtastet.

11. Rasenmähroboter nach Anspruch 10, wobei die vom Empfangsabschnitt (30) abgetastete Spannung einen positiven Wert größer 0 aufweist.

12. Rasenmähroboter nach einem der Ansprüche 1 bis 11, wobei die Maximal- und Minimalwerte entsprechend einem Abstand zwischen dem Grenzdraht (110) und dem Hauptkörper (10) variieren.

13. Rasenmähroboter nach einem der Ansprüche 1 bis 12, wobei die Steuereinheit (20) dazu ausgebildet ist zu bestimmen, dass der Hauptkörper (10) sich innerhalb eines durch den Grenzdraht (110) definierten Betriebsbereichs befindet, wenn die Anzahl der oberen Wendebereiche größer ist als die Anzahl der unteren Wendebereiche.

14. Rasenmähroboter nach einem der Ansprüche 1 bis 13, wobei die Steuereinheit (20) dazu ausgebildet ist zu bestimmen, dass sich der Hauptkörper (10) außerhalb eines durch den Grenzdraht (110) definierten Betriebsbereichs befindet, wenn die Anzahl der oberen Wendebereiche kleiner ist als die Anzahl der unteren Wendebereiche.

## Revendications

1. Robot tondeuse configuré pour fonctionner à l'intérieur d'une région de fonctionnement définie par une partie de marquage périphérique qui a un câble périphérique (110) générant un signal spécifique, comprenant :
un corps principal (10) qui est configuré pour recevoir le signal généré par le câble périphérique (110) et est entraîné dans une certaine région de la région de fonctionnement,
dans lequel le corps principal (10) comprend :
une partie de réception (30) qui est configurée pour recevoir le signal transmis du câble périphérique (110) ;
un dispositif de commande (20) qui est
configuré pour analyser une forme d'onde du signal reçu dans la partie de réception (30) pour déterminer une valeur maximale et une valeur minimale pour un temps prédéterminé et une plage de valeur maximale constante respective et une plage de valeur minimale constante respective,
configuré pour identifier le nombre de parties d'inflexion supérieure présentes à l'intérieur de la plage de valeur maximale constante et le nombre de parties d'inflexion inférieure présentes à l'intérieur de la plage de valeur minimale constante, configuré pour comparer le nombre de parties d'inflexion supérieure au nombre de parties d'inflexion inférieure pour déterminer une position du corps principal (10) par rapport au câble périphérique (110), et
dans lequel chacune des parties d'inflexion supérieure désigne une partie au niveau de laquelle la forme d'onde du signal est modifiée d'ascendante à descendante et chacune des parties d'inflexion inférieure désigne une partie au niveau de laquelle la forme d'onde du signal est modifiée de descendante à ascendante ;
une partie de coupe (50) configurée pour couper un gazon ; et
une partie d'entraînement (40) configurée pour déplacer et tourner le corps principal (10) dans une direction souhaitée,
dans lequel la partie d'entraînement (40) inclut une pluralité de roues rotatives, chacune d'elles étant tournée individuellement.

2. Robot tondeuse selon la revendication 1, dans lequel la partie de réception (30) reçoit des ondes électromagnétiques générées par le courant s'écoulant dans le câble périphérique (110).

3. Robot tondeuse selon la revendication 2, dans lequel le dispositif de commande (20) est configuré pour acquérir des informations relatives à l'un parmi : si le corps principal (10) atteint ou non le câble périphérique (110), si le corps principal (10) est ou non présent à l'intérieur d'une surface incurvée fermée formée par le câble périphérique (110), et si le corps principal (10) est ou non entraîné le long du câble périphérique (110), en utilisant les informations reçues par la partie de réception (30).

4. Robot tondeuse selon la revendication 2, dans lequel le corps principal (10) est configuré pour entraîner la partie d'entraînement (40) en utilisant les informations reçues par la partie de réception (30).

5. Robot tondeuse selon la revendication 4, dans lequel le dispositif de commande (20) est configuré pour établir une carte de la région de fonctionnement définie par le câble périphérique (110) par l'acquisition d'informations de coordonnées en fonction d'une trajectoire de déplacement du corps principal (10) pendant que le corps principal (10) se déplace le long du câble périphérique (110).

6. Robot tondeuse selon la revendication 5, dans lequel le dispositif de commande (20) est configuré pour régler un point de départ depuis lequel le corps principal (10) se déplace avant de commencer à fonctionner au moyen des informations de coordonnées de la région de fonctionnement.

7. Robot tondeuse selon la revendication 6, dans lequel le dispositif de commande (20) est configuré pour commander la partie d'entraînement (40) de sorte que le corps principal (10) se déplace jusqu'au point de départ.

8. Robot tondeuse selon la revendication 6, dans lequel le dispositif de commande (20) est configuré pour permettre à la partie de coupe (50) d'être entraînée après que le corps principal (10) se déplace jusqu'au point de départ de fonctionnement, de sorte que la partie de coupe (50) commence à tondre le gazon.

9. Robot tondeuse selon l'une quelconque des revendications 1 à 8, dans lequel la partie de marquage périphérique est configurée pour générer un signal lorsqu'un courant alternatif ayant un cycle constant est fourni dans le câble périphérique (110).

10. Robot tondeuse selon l'une quelconque des revendications 1 à 9, dans lequel la partie de réception (30) détecte une tension induite générée par le signal fourni par le câble périphérique (110).

11. Robot tondeuse selon la revendication 10, dans lequel la tension détectée par la partie de réception (30) est une valeur positive supérieure à 0.

12. Robot tondeuse selon l'une quelconque des revendications 1 à 11, dans lequel les valeurs maximales et minimales varient en fonction d'une distance entre le câble périphérique (110) et le corps principal (10).

13. Robot tondeuse selon l'une quelconque des revendications 1 à 12, dans lequel le dispositif de commande (20) est configuré pour déterminer que le corps principal (10) est situé à l'intérieur d'une région de fonctionnement définie par le câble périphérique (110) lorsque le nombre de parties d'inflexion supérieure est supérieur au nombre de parties d'inflexion inférieure.

14. Robot tondeuse selon l'une quelconque des revendications 1 à 13, dans lequel le dispositif de commande (20) est configuré pour déterminer que le corps principal (10) est situé à l'extérieur d'une région de fonctionnement définie par le câble périphérique (110) lorsque le nombre de parties d'inflexion supérieure est inférieur au nombre de parties d'inflexion inférieure.
